# EUROPÄISCHE PATENTSCHRIFT

(11) **EP 1 105 067 B1**
(45) Veröffentlichungstag und Bekanntmachung des Hinweises auf die Patenterteilung: **12.05.2004**
(21) Anmeldenummer: 99944477.1
(22) Anmeldetag: 23.08.1999
(51) Int. Cl.: A61C 13/00, A61C 11/00

(54) **VERFAHREN ZUR RECHNERGESTEUERTEN HERSTELLUNG VON ZAHNERSATZ**
METHOD FOR THE COMPUTER-CONTROLLED PRODUCTION OF DENTURES
PROCEDE DE FABRICATION DE PROTHESE DENTAIRE PILOTE PAR ORDINATEUR

(30) Priorität: 22.08.1998 DE 19838238
(43) Veröffentlichungstag der Anmeldung: 13.06.2001
(73) Patentinhaber: Girrbach Dental GmbH, 75177 Pforzheim (DE)
(72) Erfinder: LUTHARDT, Ralph, G., D-01309 Dresden (DE)
(74) Vertreter: Frank, Gerhard, Dipl.-Phys.
(86) Internationale Anmeldenummer: PCT/EP1999/006170
(87) Internationale Veröffentlichungsnummer: WO 2000/010482

(56) Entgegenhaltungen:
- WO-A-94/10935
- WO-A-94/27523
- WO-A-95/22299
- DE-A- 19 518 702

## Beschreibung

Die Erfindung bezieht sich auf ein Verfahren zur rechnergesteuerten Herstellung von Zahnersatz zur Restauration von zumindest einem Zahn oder einem Kieferbereich oder einem vollständigen Kiefer, insbesondere der okklusalen bzw. inzisalen Kontaktverhältnisse. Ein Herstellungsverfahren ist aus der WO-A-95/22299 bekannt.

Ein entsprechendes Verfahren ist der DE 195 18 702 A1 zu entnehmen. Dabei wird zunächst mit Hilfe einer Messeinrichtung, bei der es sich um ein Abtastsystem mit optischem oder mechanischem Fühler oder 3D-Kamera handeln kann, die Geometrie des zu restaurierenden Zahnes und seiner Umgebung aufgenommen und elektronisch gespeichert. In einem zweiten Schritt wird das Bild interpretiert. In einem dritten Schritt wird die Restauration konstruiert. Sodann werden die mittels CAD gewonnenen digitalisierten Signale einer numerisch gesteuerten Maschine (CAM) zugeführt, um aus einem Materialblock den Zahnersatz zu fertigen. Das Erfassen der Geometrie des zu restaurierenden Bereichs erfolgt an einem Behandlungsplatz wie Zahnarztstuhl. Dagegen erfolgt die Auswertung der Messergebnisse sowie die Herstellung des Zahnersatzes selbst an einem gesonderten Ort. Die CAD/CAM-Aufgaben können dabei über einen Zentralrechner ausgeführt werden.

Ein entsprechendes Verfahren zeigt jedoch den Nachteil, dass eine hinreichende Gestaltung der Kontaktfläche des Zahnersatzes nicht erfolgen kann. Vielmehr bedarf es häufig einer Nachbearbeitung.

CAD/CAM-Techniken zur Herstellung eines Zahnersatzes gelangen auch nach der EP 0 311 214 B1 zur Anwendung, wobei zur Geometriebestimmung des zu konstruierenden Zahnersatzes ein dreidimensionales Foto eines durch einen Zahnarzt präparierten Zahnes im Mund des Patienten hergestellt wird.

Aus der Literaturstelle Phillip Journal 7, Seiten 227 bis 235, Computermodellierter Zahnersatz mit dem Cicero-System, ist ein automatisches Fabrikationsverfahren für festsitzende Restaurationen bekannt. Dabei werden eine optische Vermessung, Sintertechnologie und computerunterstützte Fertigungstechnik verwendet.

Der vorliegenden Erfindung liegt u. a. das Problem zu Grunde, ein Verfahren der eingangs genannten Art so weiterzubilden, dass auf einfache Weise Zahnersatz mittels CAD/CAM-Techniken herstellbar ist, wobei gleichzeitig sichergestellt werden soll, dass die Kontaktflächen des Zahnersatzes die erforderliche individuelle Gestaltung aufweisen, so dass ein Nacharbeiten grundsätzlich nicht erforderlich ist. Auch soll schädelbezüglicher Oberkieferposition Rechnung getragen werden, insbesondere in Bezug auf das Kiefergelenk, dessen Drehachse (Scharnierachse) und die Bewegungsbahnen der Kiefergelenkköpfchen.

Erfindungsgemäß wird das Problem im Wesentlichen durch die Verfahrensschritte gelöst:
- Abformen von Ober- und Unterkiefer zur Herstellung von Oberkiefer- und Unterkiefermodellen sowie Zuordnung dieser mittels eines Artikulators in einer der Patientensituation entsprechenden räumlichen Orientierung zueinander,
- Zuordnung von zumindest zwei Fixpunkten des Oberkiefermodells und/oder des Unterkiefermodells oder gewählter Referenzpunkte zur Drehachse des Artikulators oder dieser zugeordneter zumindest zwei Bezugspunkte,
- Anordnen des Oberkiefermodells und Anordnen des Unterkiefermodells in einer Messeinrichtung zur Geometriebestimmung des zu restaurierenden Zahns bzw.
   Kieferbereichs oder Kiefers, wobei mindestens zwei Fixpunkte in vorbestimmter Stellung zum Koordinatensystem der Messeinrichtung zur virtuellen Darstellung der Drehachse des Artikulators bzw. der dieser zugeodneten zumindest zwei Bezugspunkte positioniert werden,
- Digitalisieren der Ober- und Unterkiefermodelle oder Anteile dieser Modelle,
- Zusammenfügen der Digitalisierdaten des Ober- und Unterkiefers entsprechend der mit der Vermessung übertragenen Daten der Fixpunkte des Artikulators,
- Konstruktion des Zahnersatzes mittels CAD und
- Fertigung des Zahnersatzes mittels CAM.

Insbesondere ist vorgesehen, dass die bekannte räumliche Orientierung der Fixpunkte zur Drehachse (Scharnierachse) des Artikulators oder weiterer geometrischer Daten des Artikulators über ein mit den Modellen des Ober- und/oder Unterkiefers verbundenes Referenzelement, das nur in einer einzigen Position in das Messsystem einzusetzen ist, eindeutig in das Messsystem übertragen wird und damit direkt oder mittelbar eine Zuordnung virtueller oder realer Bezugspunkte der Drehachse (Scharnierachse) des Artikulators oder weiterer geometrischer Größen des Artikulators zum Koordinatensystem des Messsystems oder der gemessenen Daten möglich wird.

Vorzugsweise kann eine beliebige Positionierung der Modelle im Messsystem erfolgen und die Fixpunkte zum Artikulator über ein externes Referenzelement, das zusammen mit den Modellen vermessen wird oder mittelbar eine definierte Position der Modelle zum Messsystem definiert, in den Datensatz übertragen werden und damit direkt oder mittelbar eine Zuordnung virtueller oder realer Bezugspunkte der Drehachse (Scharnierachse) des Artikulators oder weiterer geometrischer Größen des Artikulators zum Koordinatensystem des Messsystems oder der gemessenen Daten möglich werden.

In Weiterbildung ist vorgesehen, dass mehr als zwei Fixpunkte und/oder eine Bezugsebene zur Definition der rämlichen Lagebeziehung der Modelle zum Artikulator genutzt werden und somit beim Umsetzen der Modelle in das Messsystem die im Artikulator fixierte Position einschließlich der Abstandsbeziehung der Modelle in okklusaler Richtung (Berührungspunkte der Zahnreihen beider Kiefer (Modelle)) in die räumliche Orientierung der Datensätze von Ober- und Unterkiefer übertragen werden.

Erfindungsgemäß nutzt man konventionelle Techniken zur Herstellung eines Zahnersatzes mit individuell gestalteter Kontaktfläche, indem zur Herstellung und Ausrichtung von Oberkiefer- und Unterkiefermodellen übliche zahnärztliche Registriertechniken zur Anwendung gelangen, die beherrschbar und umfassend erprobt sind.

Zur Geometriebestimmung der Restauration werden die Oberkiefer- und Unterkiefermodelle nach bekannten Techniken vermessen, wobei durch die eindeutige Zuordnung z. B. des Oberkiefermodells zu der Drehachse des Artikulators und damit aufgrund der Ausrichtung des Unterkiefers auf den Oberkiefer der ebenfalls erfolgenden eindeutigen Zuordnung des Unterkiefermodells auf die Drehachse des Artikulators schädelbezügliche Oberkieferpositionen berücksichtigt werden können und okklusale Bereiche in ihrer räumlichen Beziehung zueinander optimal nachempfunden und bearbeitet werden können. Bei Vermessung des Oberkiefermodells und des Unterkiefermodells liegt die Drehachse des Artikulators virtuell vor, so dass eine eindeutige Zuordnung der Daten mit dem Ergebnis gegeben ist, dass eine optimale Geometriebestimmung des zu restaurierenden Zahnes bzw. Kieferbereichs unter Berücksichtigung einer individuellen Gestaltung der Kontaktflächen erfolgt. Die Nutzung von mehr als zwei Fixpunkten oder einer Bezugsebene in Bezug auf den Artikulator gestattet es beim Umsetzen der Modelle in das Messsystem die im Artikulator fixierte Position einschließlich der Abstandsbeziehung der Modelle in okklusaler Richtung (Berührungspunkte der Zahnreihen beider Kiefer (Modelle)) in die räumliche Orientierung der Datensätze von Ober- und Unterkiefer zu übermmitteln.

Dadurch, dass beim Vermessen des Oberkiefermodells bzw. Unterkiefermodells die Drehachse des Artikulators sowie gegebenenfalls ein weiterer Bezugspunkt oder eine Bezugsebene virtuell vorliegen, können zur Berechnung der Restauration Kondylenbahnneigungswinkel und/oder Bennettwinkel und/oder Fischerwinkel und/oder Side-Shift berücksichtigt werden, so dass ein optimaler Zahnersatz herstellbar ist.

Mit anderen Worten wird patientenseitig mit konventionellen Methoden gearbeitet, wobei gleichzeitig sämtliche Vorteile rechnergesteuerter Arbeitsverfahren genutzt werden.

Als Fixpunkte werden insbesondere die Sockelplatte des Oberkiefermodelles verwendet, die sowohl in dem Artikulator als auch in einer Messeinrichtung zur Geometriebestimmung des zu restaurierenden Zahns und seiner Umgebung eindeutig positionierbar ist. Das Abtasten des Oberkiefermodells und des Unterkiefermodells kann mechanisch und/oder optisch erfolgen.

Die entsprechenden digitalisierten Messergebnisse werden unter Nutzung der bekannten räumlichen Orientierung der zumindest zwei Fixpunkte des Ober- und Unterkiefermodells oder gewählter Referenzpunkte zur Drehachse (Scharnierachse) des Artikulators oder dieser zugeordneter Bezugspunkte mit den digitalisiert vorliegenden virtuellen Bezugspunkten der Drehachse (Scharnierachse) des Artikulators oder weiteren geometrischen Daten des Artikulators verknüpft, anschließend aufgrund der so gewonnenen Werte der Zahnersatz virtuell konstruiert und dem konstruierten Zahnersatz entsprechende digitale Signale mittels CAM zur Fertigung des Zahnersatzes umgesetzt.

Insbesondere ist vorgesehen, dass zur Geometriebestimmung eine CCD-Kamera verwendet wird, wobei die zu erfassenden Bereiche des Oberkiefermodells und des Unterkiefermodells zum Beispiel mit Streifenmuster beleuchtet werden können. Andere Verfahren wie Graycode-Verfahren, Phaseshift-Verfahren, phasenmessende Verfahren oder Triangulation sind gleichfalls möglich.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung eines der Zeichnung zu entnehmenden bevorzugten Ausführungsbeispiels.

Es zeigen:
- Fig. 1: eine Prinzipdarstellung eines Gesichtsbogens mit zwischen Ober- und Unterkiefer an einer Person positionierter Bissgabel,
- Fig. 2: der der Fig. 1 zu entnehmende Gesichtsbogen zum Positionieren eines Oberkiefermodells in einem Artikulator,
- Fig. 3: der Artikulator nach Fig. 2 mit einem artikulierten Ober- und Unterkiefermodell,
- Fig. 4: eine Ausführungsform eines in einer Messeinrichtung angeordneten Oberkiefermodells und
- Fig. 5: die Messeinrichtung nach Fig. 4 mit virtueller Artikulatordrehachse.

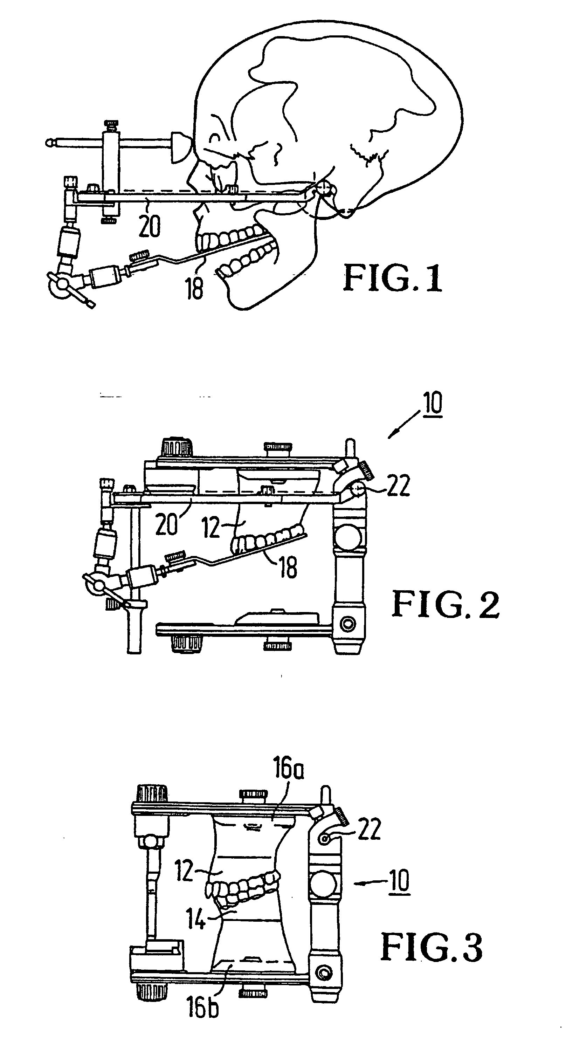

In den Fig. 1 bis 3 sind hinlänglich bekannte Geräte und mit diesen durchzuführende zahnärztliche Registriertechniken rein prinzipiell dargestellt, mit denen in einem Artikulator 10 ein Oberkiefermodell 12 und zu diesem ein Unterkiefermodell 14 einartikuliert werden. Hierzu wird beispielsweise in gewohnter Weise zunächst durch Abformen ein Kiefermodell mit Modellsockel hergestellt, welches zur Montage in den Artikulator 10 mit einer lösbar mit dem Artikulator verbundenen Sockelplatte 16a über Gipsmaterial verbunden wird, nachdem das geeignete Modell auf einer Bissgabel 18 ausgerichtet ist, die entsprechend der in Fig. 1 dargestellten Verfahrensweise über einen Gesichtsbogen 20 die Drehachse (Scharnierachse) des Kiefergelenkes des Patienten beispielsweise durch eine schwenkbar im äußeren Gehörgang des Patienten positionierte Vorrichtung überträgt.

Nach Entfernen des Gesichtsbogens 20 wird sodann der durch den Unterkiefer gebildete Gegenbiss mit Sockelplatte 16b auf das Oberkiefermodell 12 ausgerichtet.

Da das Oberkiefermodell 12 eindeutig zur Drehachse 22 des Artikulators 10 ausgerichtet ist, ist folglich durch die wiederum eindeutige Zuordnung zwischen dem Oberkiefermodell 12 und dem Unterkiefermodell 14 letzteres auch eindeutig zur Drehachse 22 positioniert.

Insoweit wird jedoch auf hinlänglich bekannte und beherrschte Registriertechniken verwiesen. Gleiches gilt in Bezug auf mögliche exzentrische Bewegungen des Unterkiefers, so dass insoweit auch auf den vorbekannten Stand der Technik verwiesen wird.

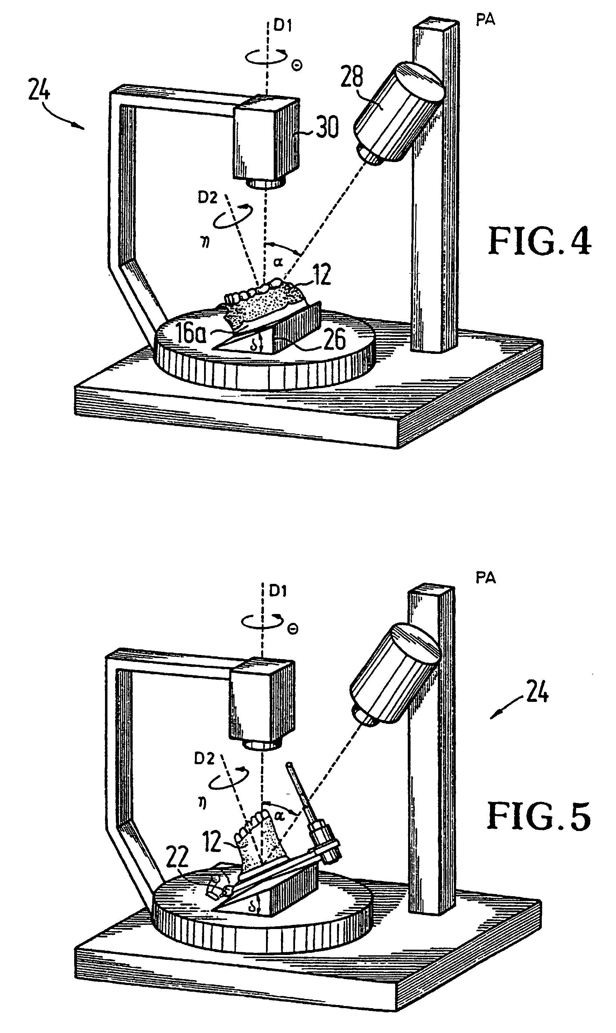

Erfindungsgemäß ist nun vorgesehen, dass mittels einer Messeinrichtung 24 die Geometrie eines zu restaurierenden Zahnes bzw. Kieferbereichs oder Kiefers und dessen Umgebung bestimmt wird, wobei die Drehachse 22 des Artikulators 10 anhand der bekannten geometrischen Beziehung der zumindest zwei Fixpunkte des Ober- und Unterkiefermodells oder gewählter Referenzpunkte zur Drehachse (Scharnierachse) des Artikulators (z. B. Sockelplatte) oder dieser zugeordneter Bezugspunkte zur Drehachse (Scharnierachse) des Artikulators in bekannter räumlicher Orientierung zu dieser in die Messeinrichtung eingesetzt werden, wie dies prinzipiell durch die Fig. 5 verdeutlicht wird. Somit erfolgt bei der - im Ausführungsbeispiel optischen - Vermessung des Oberkiefermodells 12 eine gleichzeitige Zuordnung der Daten zur Drehachse 22 des Artikulators 10 und somit zur Drehachse (Scharnierachse) des Kiefergelenkes des Patienten. Bei Anwendung von Bezugsebenen (beispielsweise Sockelplatten) zur Übertragung der Drehachse (Schamierachse) wird auch eine korrekte Zuordnung der Modelle entsprechend des verbleibenden Freiheitsgrades (Rotation um die Drehachse (Scharnierachse)) sichergestellt. Alternativ kann dieser Freiheitsgrad durch Berechnung der "Berührung der Datensätze" bei Rotation um die Drehachse (Scharnierachse) softwaretechnisch definiert werden. Die Übertragung der Drehachse (Scharnierachse) des Unterkiefers zum Oberkiefer ermöglicht, dass zur Konstruktion des Zahnersatzes aus den durch die Messung gewonnen und digitalisierten Daten individuelle Werte bezüglich der Bewegungsbahnen des Unterkiefers (Kondylenbahnneigungswinkel, Bennett-Winkel, Fischer-Winkel, Side-Shift) zum Oberkiefer mitberücksichtigt werden können.

Mit anderen Worten erfolgt eine räumliche Zuordnung von Oberkiefermodell 12 und Unterkiefermodell 14 aufgrund der virtuell hinterlegten Drehachse 22, obwohl Unterkiefermodell 14 und Oberkiefermodell 12 unabhängig voneinander ausgemessen werden.

Ausschlaggebend ist allein, dass eine eindeutige Bezugnahme zwischen einem der Modelle 12 und 14 zur Drehachse 22 oder dieser zugeordnete Bezugspunkte und sodann zum Koordinatensystem einer Messeinrichtung 24 gegeben ist. Dies erfolgt vorzugsweise über die Sockelplatte 16a, 16b, die in der in den Fig. 4 und 5 dargestellten Messeinrichtung 24 eindeutig positioniert ist und damit eine eindeutige Zuordnung zur Drehachse 22 oder entsprechenden Bezugspunkte des Artikulators 10 ermöglicht.

Im Ausführungsbeispiel der Fig. 4 und 5 ist das Oberkiefermodell 12 auf einer keilförmigen Halterung 26 angeordnet, um sodann den Bereich des zu restaurierenden Zahns bzw. Kiefers z. B. mit Streifenlicht, welches von einem Streifenprojektor 28 abgestrahlt wird, zu beaufschlagen. Mit z. B. einer CCD-Kamera 30 wird die Abbildung des Streifenmusters bestimmt, wobei z. B. durch die Verzerrung des Streifenmusters Tiefeninformationen erzielbar sind.

Zur räumlichen Ausmessung der Modelle 12, 14 kann die CCD-Kamera 30 um die Achse D1 gedreht werden. Entsprechend besteht auch die Möglichkeit, das Modell 12 um die Achse D2 zu drehen. Durch diese Maßnahmen ist eine räumliche Geometrieerfassung des Modells 12 möglich.

Entsprechend wird das Unterkiefermodell 14 ausgemessen, welches aufgrund der eindeutigen Zuordnung zu dem Oberkiefermodell 12 nach dem Einartikulieren gleichfalls eine eindeutige Zuordnung zu der virtuell miterfassten Drehachse 22 des Artikulators 10 zeigt.

Die so ermittelten Werte werden mittels eines CAD-Systems verarbeitet, um einen Zahnersatz zu konstruieren. Anschließend erfolgt die Herstellung eines Zahnersatzes in gewohnter Weise mit CAM (Computer Aided Manufacturing).

Andere Möglichkeiten zum Ausmessen des Ober- und Unterkiefermodells 12 und 14 wie z. B. stereophotogrammetrische Verfahren unter Verwendung konventioneller Kameras mit Lichtleiter und konventionellen Filmmaterials und anschließender Digitalisierung oder Anfertigen von Aufnahmen jeder Präparation mittels CCD-Kameras, wobei Streifenmuster zur Ermittlung der Tiefeninformation abgebildet werden können, sind gleichfalls möglich. Das mechanische Digitalisieren ist als weitere Messmöglichkeit anzugeben.

## Patentansprüche

1. Verfahren zur rechnergesteuerten Herstellung von Zahnersatz zur Restauration von zumindest einem Zahn- oder einem Kieferbereich oder einem vollständigen Kiefer mit dem folgenden Verfahrensschritt:
- Abformen von Oberkiefer und Unterkiefer, Herstellung von Oberkiefermodell und Unterkiefermodell sowie Zuordnung dieser in einem Artikulator in einer der Patientensituation entsprechenden räumlichen Orientierung zueinander, **gekennzeichnet durch** folgende Verfahrensschritte:
- Zuordnung von zumindest zwei Fixpunkten des Oberkiefermodells oder des Unterkiefermodells oder gewählter Referenzpunkte zur Drehachse des Artikulators oder dieser zugeordnete zumindest zwei Bezugspunkte,
- Anordnung des Oberkiefermodells und Anordnung des Unterkiefermodells in einer Messeinrichtung zur Geometriebestimmung des zu restaurierenden Zahns bzw. Kieferbereichs oder Kiefers, wobei die mindestens zwei Fixpunkte in vorbestimmter Stellung zum Koordinatensystem der Messeinrichtung zur virtuellen Darstellung der Drehachse des Artikulators bzw. der dieser zugeordneten zwei Bezugspunkte positioniert werden,
- Digitalisierung der Ober- und Unterkiefermodelle oder Teile dieser unter Berücksichtigung der virtuellen Drehachse des Artikulators und der zumindest zwei Bezugspunkte,
- Zusammenführen der Digitalisierdaten des Ober- und Unterkiefers entsprechend der mit der Vermessung übertragenen Daten der Fixpunkte des Artikulators,
- Konstruktion des Zahnersatzes mittels CAD und
- Fertigung des Zahnersatzes mittels CAM.

2. Verfahren nach Anspruch 1,
**dadurch gekennzeichnet,**
**dass** die bekannte räumliche Orientierung der Fixpunkte zur Drehachse (Scharnierachse) des Artikulators oder weiterer geometrischer Daten des Artikulators über ein mit den Modellen des Ober- und/oder Unterkiefers verbundenes Referenzelement, das nur in einer einzigen Position in das Messsystem einzusetzen ist, eindeutig in das Messsystem übertragen wird und damit direkt oder mittelbar eine Zuordnung virtueller oder realer Bezugspunkte der Drehachse (Scharnierachse) des Artikulators oder weiterer geometrischer Größen des Artikulators zum Koordinatensystem des Messsystems oder der gemessenen Daten möglich wird.

3. Verfahren nach Anspruch 1 oder 2,
**dadurch gekennzeichnet,**
**dass** eine beliebige Positionierung der Modelle im Messsystem erfolgt und die Fixpunkte zum Artikulator über ein externes Referenzelement, das zusammen mit den Modellen vermessen wird oder mittelbar eine definierte Position der Modelle zum Messsystem definiert, in den Datensatz übertragen wird und damit direkt oder mittelbar eine Zuordnung virtueller oder realer Bezugspunkte der Drehachse (Scharnierachse) des Artikulators oder weiterer geometrischer Größen des Artikulators zum Koordinatensystem des Messsystems oder der gemessenen Daten möglich wird.

4. Verfahren nach einem der vorhergehenden Ansprüche,
**dadurch gekennzeichnet,**
**dass** mehr als zwei Fixpunkte und/oder eine Bezugsebene zur Definition der rämlichen Lagebeziehung der Modelle zum Artikulator genutzt werden und somit beim Umsetzen der Modelle in das Messsystem die im Artikulator fixierte Position einschließlich der Abstandsbeziehung der Modelle in okklusaler Richtung (Berührungspunkte der Zahnreihen beider Kiefer (Modelle)) in die räumliche Orientierung der Datensätze von Ober- und Unterkiefer übertragen werden.

5. Verfahren nach einem der vorhergehenden Ansprüche,
**dadurch gekennzeichnet,**
**dass** neben den die virtuelle Drehachse des Artikulators bzw. die dieser zugeordneten Bezugspunkte berücksichtigenden gemessenen die Geometrie des Oberkiefermodells bzw. Unterkiefermodells repräsentierenden Signalen Kondylenbahnneigungswinkel und/oder Bennett-Winkel und/oder Fischer-Winkel und/oder Side-Shift zur Konstruktion des Zahnersatzes einbezogen werden.

6. Verfahren nach einem der vorhergehenden Ansprüche,
**dadurch gekennzeichnet,**
**dass** die von dem Oberkiefermodell und/oder die von dem Unterkiefermodell erhaltenen digitalisierten Messergebnisse der in digitalisierten Werten vorliegenden virtuellen Drehachse des Artikulators zugeordnet werden, sodann der Zahnersatz virtuell konstruiert und dem konstruierten Zahnersatz entsprechende digitale Signale mittels CAM zur Fertigung des Zahnersatzes umgesetzt werden.

7. Verfahren nach einem der vorhergehenden Ansprüche,
**dadurch gekennzeichnet,**
**dass** als Fixpunkte die Sockelplatte des Oberkiefermodells verwendet wird.

8. Verfahren nach einem der vorhergehenden Ansprüche,
**dadurch gekennzeichnet,**
**dass** das Oberkiefermodell und/oder das Unterkiefermodell mechanisch und/oder optisch abgetastet werden.

9. Verfahren nach einem der vorhergehenden Ansprüche,
**dadurch gekennzeichnet,**
**dass** zur Geometriebestimmung des zu restaurierenden Zahnes bzw. Kieferbereichs eine CCD-Kamera verwendet wird.

10. Verfahren nach einem der vorhergehenden Ansprüche,
**dadurch gekennzeichnet,**
**dass** zur Messung des Zahnes bzw. Kieferbereichs dieser mit Streifenmuster bestrahlt wird.

11. Verfahren nach einem der vorhergehenden Ansprüche,
**dadurch gekennzeichnet,**
**dass** zur Geometriebestimmung des zu restaurierenden Zahns bzw. Kieferbereichs ein stereophotogrammetrisches Verfahren verwendet wird.

12. Verfahren nach einem der vorhergehenden Ansprüche,
**dadurch gekennzeichnet,**
**dass** mechanische oder optische Positionierhilfen für die Übertragung der Scharnierachse genutzt werden.

13. Verfahren nach einem der vorhergehenden Ansprüche,
**dadurch gekennzeichnet,**
**dass** der nach Zuordnung der gemessenen Datensätze der Ober- und Unterkiefermodelle mittels der Drehachse (Scharnierachse) verbleibende Freiheitsgrad durch Berechnung von Überlappungen der Datensätze von Ober- und Unterkiefer oder graphische Darstellung dieser Überlappungen in der CAD-Software definiert wird.

## Claims

1. Procedure for computer-controlled fabrication of artificial denture for restoring at least one tooth or a partial jaw or a complete jaw, comprising the following step:
- Taking an impression of the upper and the lower jaws, fabricating the upper jaw and the lower jaw models as well as arranging the same in an articulator in a patient's case dependent spatial orientation to one another,
- allocation of at least two fixed points of the upper jaw model or of the lower jaw model or of designated reference points relative to the pivot of the articulator or at least two reference points assigned to the same,
- arrangement of the upper jaw model and the lower jaw model in a measuring device for determining the geometry of the tooth or partial jaw or complete jaw to be restored, wherein at least two fixed points are located in predetermined position relative to the coordinate system of the measuring device for virtual representation of the pivot of the articulator or to the two reference points assigned to the same,
- digitalisation of the upper and lower jaw models or parts of the same, by considering the virtual pivot of the articulator and at least the two reference points,
- combining the digitalised data of the upper and lower jaw according to the data - transmitted with the measurements - of the fixed point of the articulator,
- design of the artificial denture using CAD and
- fabrication of the artificial denture using CAM.

2. Procedure according to Claim 1,
**characterised in that**,
the known spatial orientation of said fixed points relative to the pivot (hinge axis) of the articulator or to other geometrical data of the articulator is distinctively transferred to the measuring system via a reference element, connected with the models of the upper and/or lower jaw, which is then fitted into a specific position in the measuring system and thus direct or indirect assignment of virtual or real reference points of the pivot (hinge axis) of the articulator or of other geometrical quantities of the articulator is possible relative to the coordinate system of the measuring system or of the measured data.

3. Procedure according to Claim 1 or 2,
**characterised in that**,
arbitrary positioning of the models takes place in the measuring system and the fixed points relative to the articulator via an external reference element that is measured together with the models or indirectly a specific position of the models defined relative to the measuring system is transferred to the data set and thus a direct or indirect assignment of virtual or real reference points of the pivot (hinge axis) of the articulator or of other geometrical quantities of the articulator is possible relative to the coordinate system of the measuring system or of the measured data.

4. Procedure according to one of the preceding claims,
**characterised in that**,
more than two fixed points and/or a reference plane are used for defining the spatial positional relationship of the models to the articulator and thus, when transferring the models into the measuring system, the fixed position in the articulator together with the displacement relationship of the models in occlusal direction (contact points of the teeth rows on both jaws (models)) are transferred into the spatial orientation of the data sets of the upper and lower jaws.

5. Procedure according to one of the preceding claims,
**characterised in that**,
besides the measured condylar curve inclination and/or Bennet angle and/or Fischer angle and/or side shift, the signals representing the geometry of the upper jaw model or the lower jaw model, the virtual pivot of the articulator or the reference points assigned to the latter are included in the design of the artificial denture.

6. Procedure according to one of the preceding claims,
**characterised in that**,
the digitalised measurements obtained from the upper jaw model and/or the lower jaw model are assigned to the virtual pivot of the articulator available in digital values, hence the artificial denture is designed virtually and the digital signals corresponding to the designed artificial denture are converted by means of CAM to fabricate the denture.

7. Procedure according to one of the preceding claims,
**characterised in that**,
the base plate of the upper jaw model is used as fixed points.

8. Procedure according to one of the preceding claims,
**characterised in that**,
the upper jaw model and/or the lower jaw model are mechanically and/or optically sensed.

9. Procedure according to one of the preceding claims,
**characterised in that**,
a CCD camera is used for geometrical determination of the tooth or partial jaw to be restored.

10. Procedure according to one of the preceding claims,
**characterised in that**,
to measure the tooth or partial jaw; the same is irradiated with a stripes-pattern.

11. Procedure according to one of the preceding claims,
**characterised in that**,
a stereophotogrammetric process is used for determining the geometry of the tooth or partial jaw to be restored.

12. Procedure according to one of the preceding claims,
**characterised in that**,
that mechanical or optical positioning aids are used for the transfer of the hinge axis.

13. Procedure according to one of the preceding claims,
**characterised in that**,
the degree of freedom left over after assignment of the measured data sets of the upper and lower jaw models via the pivot (hinge axis) is defined by calculation of the overlaps of the data sets of the upper and lower jaw or by graphical representation of these overlaps in the CAD software.

## Revendications

1. Processus de fabrication de prothèse dentaire assistée par ordinateur, utilisé lors de la restauration d'au moins une dent ou d'une région de la mâchoire ou alors d'une mâchoire complète. Ce processus comprend l'étapes suivante :
- Déformation de la mâchoire supérieure et inférieure, fabrication d'un modèle de mâchoire supérieure et inférieure ainsi que le positionnement des modèles au sein d'un articulateur dans une orientation spatiale correspondant à la situation du patient.
- Positionnement d'au moins deux points de fixation du modèle de la mâchoire supérieure ou de la mâchoire inférieur ou bien de points de référence sélectionnés pour l'axe de rotation de l'articulateur ou au moins deux points de relation qui lui sont attribués.
- Positionnement du modèle de la mâchoire supérieure et positionnement de la mâchoire inférieure au sein d'un dispositif de mesure afin de déterminer la géométrie de la dent à restaurer ou bien de la région de la mâchoire ou de la mâchoire complète. Dans ce cas, les deux points de fixation sont positionnés pour la représentation virtuelle de l'axe de rotation de l'articulateur ou du moins des points de référence qui lui sont attribués à la place déterminée précédemment pour le système de coordination du dispositif de mesure.
- Numérisation de la mâchoire supérieure et inférieure ou des parties de celle-ci, effectuée sous respect de l'axe de rotation virtuel de l'articulateur et des deux points de relation.
- Mise en commun des données de numérisation de la mâchoire supérieure et inférieure conformément aux données transmises avec les mesures des points de fixation de l'articulateur.
- Conception de la prothèse dentaire au moyen de la CAO et
- fabrication de la prothèse dentaire au moyen de la CFAC.

2. Processus répondant à la revendication 1,
**caractérisé par le fait,**
**que** l'orientation spatiale connue des points de fixation de l'axe de rotation (axe-charnière) de l'articulateur ou autres données géométriques de l'articulateur sont clairement transmises au sein du système de mesure au moyen d'un élément de référence relié avec les modèles de la mâchoire supérieure et/ou inférieure, qui ne peut être utilisé au sein du système de mesure que dans une position unique. Ceci permet un classement direct ou indirect des points de relation virtuels ou réels de l'axe de rotation (axe-charnière) de l'articulateur ou d'autres grandeurs géométriques de l'articulateur pour le système de coordination du système ou bien des données mesurées.

3. Processus répondant à la revendication 1 ou 2,
**caractérisé par le fait,**
**que** le positionnement sélectionné des modèles a lieu au sein du système de mesure et que les points de fixation de l'articulateur sont transmis dans un dossier de donnée par le biais d'un élément de référence externe qui est mesuré avec les modèles ou qui définit une position déterminée des modèles au sein du système de mesure. Ceci permet un classement direct ou indirect des points de relation virtuels ou réels de l'axe de rotation (axe-charnière) de l'articulateur ou d'autres grandeurs géométriques de l'articulateur pour le système de coordination du système ou bien des données mesurées.

4. Processus selon une des revendications citées- ci dessus,
**caractérisé par le fait,**
**que** plus de deux points de fixation et/ou plus d'un niveau de relation sont utilisés pour la détermination du lieu où sont positionnés les modèles dans l'articulateur et par conséquent la position fixée au sein de l'articulateur ainsi que le rapport de distance des modèles en direction occlusive ( points de contact des rangs des dents des deux mâchoires (modèles), sont transmis lors du dépôt des modèles au sein du système de mesure dans l'orientation spatiale des données relatives à la mâchoire supérieure et inférieure.

5. Processus selon une des revendications citées- ci dessus,
**caractérisé par le fait,**
**que** non seulement les signaux représentatifs comme l'angle de trajectoire orbitant du condyle et/ou l'angle Bennett et/ou l'angle Fischer et/ou le tablier porte-fourche à déplacement latéral mesurés et à prendre en considération pour la géométrie du modèle de la mâchoire supérieure et de celui de mâchoire inférieure, mais également l'axe de rotation virtuel de l'articulateur ou les points de référence y étant attribués sont utilisés pour la fabrication d'une prothèse dentaire.

6. Processus selon une des revendications citée- ci dessus,
**caractérisé par le fait,**
**que** les résultats de mesure numérisés des modèles de la mâchoire supérieure et/ou de la mâchoire inférieure obtenus sont attribués à l'axe de rotation virtuel de l'articulateur présent dans les valeurs numérisées de telle façon que la prothèse dentaire construite virtuellement et celle construite conformément aux signaux numériques soient utilisées lors de la fabrication de la prothèse dentaire au moyen de CAM.

7. Processus selon une des revendications citées- ci dessus,
**caractérisé par le fait,**
**que** les plaques du socle du modèle de la mâchoire supérieure sont utilisées comme points de fixation.

8. Processus selon une des revendications citées- ci dessus,
**caractérisé par le fait,**
**que** le modèle de la mâchoire et/ou le modèle de la mâchoire est tâté de façon mécanique et/ou optique

9. Processus selon une des revendications citées- ci dessus,
**caractérisé par le fait,**
**qu'**une caméra CDD est utilisée pour la détermination de la géométrie de la dent ou de la région de la mâchoire à restaurer.

10. Processus selon une des revendications citées- ci dessus,
**caractérisé par le fait,**
**que** la dent ou la région de mâchoire est marquée à l'aide d'un motif à rayures pour procéder aux mesures.

11. Processus selon une des revendications citées- ci dessus,
**caractérisé par le fait,**
**qu'**un processus stéréophotogrammétrique est utilisé pour la détermination géométrique de la dent ou de la région à restaurer.

12. Processus selon une des revendications citées- ci dessus,
**caractérisé par le fait,**
**que** des auxiliaires de positionnement mécaniques ou optiques sont utilisés pour la transmission de l'axe charnière.

13. Processus selon une des revendications citées- ci dessus,
**caractérisé par le fait,**
**que** le degré de liberté restant est défini par le calcul de chevauchement des données relatives à la mâchoire supérieure et inférieure ou par la représentation graphique de ces chevauchements par le logiciel CAD selon le classement des données mesurées relatives aux modèles de la mâchoire supérieure et inférieure effectué au moyen de l'axe rotatif (axe-charnière).
